# EUROPÄISCHE PATENTSCHRIFT

(11) **EP 4 414 188 B1**
(45) Veröffentlichungstag und Bekanntmachung des Hinweises auf die Patenterteilung: **16.07.2025**
(21) Anmeldenummer: 23214189.5
(22) Anmeldetag: 05.12.2023
(51) Int. Cl.: B60G 17/0165, B62D 33/02, B62D 33/03, B62D 53/06, B60J 5/10, B62D 33/027, B62D 33/037

(54) **INNENLADER MIT TORVERRIEGELUNG**
INTERNAL LOADER WITH GATE LOCK
CHARGEUR INTERNE AVEC VERROUILLAGE DE PORTE

(30) Priorität: 08.02.2023 DE 102023103076
(43) Veröffentlichungstag der Anmeldung: 14.08.2024
(73) Patentinhaber: Langendorf GmbH, 45731 Waltrop (DE)
(72) Erfinder: Strautmann, Klaus-Peter, 48291 Telgte (DE); Wilbuer, geb. Tennhoff, Christopher, 59348 Lüdinghausen (DE)
(74) Vertreter: Dr. Träger & Strautmann PAe PartG mbB

(56) Entgegenhaltungen:
- DE-A1- 3 740 491
- DE-C2- 3 740 491
- DE-U1- 202008 012 470
- DE-U1- 202016 106 682

## Beschreibung

Die Erfindung betrifft einen Innenlader nach dem Oberbegriff des Anspruchs 1 sowie ein Verfahren zum Verschließen eines Tores an einem Innenlader.

Ein Innenlader ist eine spezielle Form eines Sattelaufliegers, der es ermöglicht, besonders hohe bzw. breite Frachtstücke aufrecht und zwischen den Rädern stehend zu transportieren. Zu diesem Zweck sind die Räder nicht durch durchgehende Achsen miteinander verbunden, sondern an Einzelradschwingen an einem längs verlaufenden Rahmenprofil federnd aufgehängt. Das linke und das rechte Rahmenprofil werden durch eine Stahlbaukonstruktion gebildet, die am vorderen Ende verbunden ist und am hinteren Ende eine Öffnung aufweist. , so dass sich eine U-förmige Konstruktion ergibt, die in Draufsicht etwa die Form einer Stimmgabel ohne Griff aufweist. Die U-förmige Konstruktion bildet einen nach hinten offenen und in der Regel mit einem Tor verschließbaren Laderaum, welcher beispielsweise zum Transport großer Glasscheiben oder Beton-Fertigteilen nutzbar ist.

Ein Innenlader der im Oberbegriff beschriebenen Art ist aus DE 37 40 491 A1 bekannt. Der Innenlader umfasst ein hinteres Tor, das um Torgelenke verschwenkbar gelagert ist. Um das Verschließen des Tores zu erleichtern, weist das Tor eine Zentriereinrichtung auf, die durch kegelförmige Rasten gebildet wird. Beim Verschließen des Tores greifen die kegelförmigen Rasten in entsprechende Ausnehmungen ein, die im Fahrgestell bzw. in den Enden der Rahmenlängsträger angebracht sind. Hierdurch erfolgt beim Verschließen der Tür eine Zentrierung.

Bei geöffnetem Tor ist der U-förmige Fahrzeugrahmen jedoch relativ instabil und kann sich insbesondere dann, wenn das Fahrzeug auf unebenem Untergrund steht, verwinden. In gewissem, aber begrenztem Umfang, kann die Justiereinrichtung mittels ihrer kegelförmigen Raste und der korrespondierenden Ausnehmung kleinere Verwindungsbewegungen im Fahrzeugrahmen ausgleichen.

Da jedoch bei geöffnetem Tor eine ausreichende Stabilisierung des Fahrzeugrahmens fehlt, können unter ungünstigen Bedingungen, insbesondere bei einem sehr unebenen Untergrund, die Verwindungen im Fahrzeugrahmen so groß sein, dass die am Tor angebrachten kegelförmigen Rasten im Verhältnis zu den am Fahrzeugrahmen angebrachten Ausnehmungen einen so großen Höhenunterschied zueinander haben, dass die Spitzen der Rasten beim Schließen des Tores nicht in die Ausnehmungen hineingleiten, sondern auf den die Ausnehmungen umgebenden Fahrzeugrahmen treffen. Dies hat zur Folge, dass das Tor nicht verriegelt werden kann.

Aufgabe der Erfindung ist es, die beschriebenen Nachteile zu beseitigen und einen Innenlader vorzuschlagen, bei dem auch unter ungünstigen Bedingungen, insbesondere auf unebenen Untergrund, das Tor einfach und sicher verschlossen und verriegelt werden kann.

Diese Aufgabe wird gelöst durch einen Innenlader mit den Merkmalen des Anspruchs 1.

Der Innenlader weist einen in Fahrzeug-Längsrichtung gerichteten, U-förmigen Fahrzeugrahmen mit zwei Schenkeln auf, an denen eine Trageinrichtung zur Aufnahme eines Transportgestells angeordnet sein kann. Zwischen den Schenkeln ist ein Ladeschacht angeordnet, welcher durch ein Tor verschließbar ist.

Das Tor ist an einer ersten Außenseite des Fahrzeugrahmens mittels einer Scharniereinrichtung, die ein oder mehrere Scharniere umfassen kann, an einem der Schenkel schwenkbar angebracht. An einer zweiten Außenseite umfasst das Tor wenigstens eine Zentriereinrichtung, die mit einer an dem anderen der Schenkel des Fahrzeugrahmens angebrachten Aufnahme koinzidiert und bei geschlossenem Tor das Tor gegenüber dem genannten anderen Schenkel in eine Schließposition ausrichtet.

Die Schenkel des Fahrzeugrahmens, und damit der Fahrzeugrahmen insgesamt, werden von jeweils wenigstens einem, vorzugsweise mehreren, Laufrädern getragen. Über eine Radaufhängung sind die Laufräder an den Fahrzeugrahmen gekoppelt. Die Radaufhängungen sind mittels einer an den Schenkeln vorgesehenen Hubeinrichtung einzeln oder gemeinsam höhenverstellbar.

Das an der Öffnung des U-förmigen Fahrzeugrahmens vorgesehene Tor hat verschiedene Funktionen und dient insbesondere zum Verschließen des Ladeschachts und zur Stabilisierung des U-Förmigen Fahrzeugrahmens. Damit das Tor verriegelt werden kann, müssen die als Zentriereinrichtung vorgesehenen Teile an Tor und Fahrzeugrahmen zumindest soweit miteinander fluchten, dass sie beim Verschwenken des Tores ineinandergleiten können.

Das Fahrwerk des Innenladers weist eine Hubeinrichtung auf, mittels derer die Aufhängungen an der linken und an der rechten Fahrzeugseite separat ansteuerbar sind. So können die Unebenheiten des Untergrunds durch ein- oder beidseitiges Anheben des Fahrwerks ausgeglichen und die Bauteile von Zentriereinrichtung und Aufnahme zueinander fluchtend ausgerichtet werden. Die Hubeinrichtungen sind bei Bedarf manuell bedienbar.

Der erfindungsgemäße Innenlader umfasst weiterhin wenigstens eine Sensoreinrichtung, die die Position der Zentriereinrichtung relativ zur Position der Aufnahme detektiert. Die von der Sensoreinrichtung detektieren Positionsdaten können manuell oder elektronisch anzeigbar sein und dienen einer Bedienperson als Orientierung beim manuellen Bedienen der Hubeinrichtung und der Ausrichtung der Zentriereinrichtung zur Aufnahme. Hierdurch wird das Verschließen des Tores erleichtert.

Bei der Sensoreinrichtung kann es sich um eine mechanische Anzeige oder um eine elektronische Einrichtung handeln. Als mechanischer Sensor käme beispielsweise ein am Tor angebrachter Stabfühler in Betracht, dessen Auslenkung die Position von Zentriereinrichtung und Aufnahme zueinander kennzeichnet. Als elektronischer Sensor käme ein elektronischer Abstands- oder Winkelsensor in Betracht. Es sind somit unterschiedliche Arten von Sensoren geeignet. Wesentlich ist, dass der Sensor in der Lage ist, die relative Positionsdifferenz in Bezug auf die am Tor angebrachten Zentriereinrichtung zu der am Fahrzeugrahmen angebrachter Aufnahme zu detektieren.

In einer bevorzugten Ausführungsform umfasst der Innenlader eine Steuerungseinrichtung, vorzugsweise einen Mikrocontroller, in welchem die Positionen der Zentriereinrichtung und der Aufnahme in Bezug zueinander setzbar sind. Die Steuerungseinrichtung kann Teil einer für den Innenlader vorgesehenen zentralen Steuerungseinrichtung sein, es kann sich aber auch um eine separate Steuerungseinrichtung handeln, die beispielsweise Teil eines Nachrüstsatzes ist. Ein solcher Nachrüstsatz umfasst die für eine Zentrieranlage insgesamt vorgesehenen Bauteile und dient zum Umbau eines zunächst mit einem konventionellem Tor-Schließmechanismus ausgestatteten Innenladers.

Der Vorteil des Einsatzes einer Steuerungseinrichtung liegt insbesondere darin, dass sie eine Kommunikation mit der bereits genannten Sensoreinrichtung ermöglicht und beispielsweise die von der Sensoreinrichtung übermittelten Ist-Positionsdaten mit zum Schließen des Tores vordefinierten und in der Steuerungsanlage gespeicherten Soll-Daten abgleichen kann. Auf Basis eines solchen Abgleichs wird dann auch eine automatische Steuerung der Hubeinrichtung und insgesamt die automatisierte Ausrichtung des Tores zum Fahrzeugrahmen ermöglicht.

Die am Tor vorgesehene Zentriereinrichtung ist vorzugsweise konisch, beispielsweise keilförmig konisch, oder als Kegel ausgeführt. Die am Fahrzeugrahmen vorgesehene Aufnahme ist an die Kontur der Zentriereinrichtung angepasst und kann beispielsweise in Form einer Kegeltasche ausgebildet sein. Selbstverständlich ist auch eine Umkehrung der Anordnung möglich, also die Anbringung der Zentriereinrichtung am Fahrzeugrahmen und die Anbringung der Aufnahme am Tor.

Die zueinander in Bezug stehenden Teile der Zentrieranlage sind in einem gewissen Bereich selbstzentrierend, so dass kleinere Positionsabweichung von Tor und Fahrzeugrahmen zueinander beim Schließen des Tores ausgeglichen werden.

Vorzugsweise umfasst der Innenlader in Bezug auf das zu schließende Tor weiterhin eine Verriegelungseinrichtung, mittels derer das Tor in einer Schließposition fixierbar ist. Dies ist insbesondere dann von Vorteil, wenn das Tor mittels eines Hydraulikzylinders verschlossen wird. Zwar ist der Hydraulikzylinder grundsätzlich in der Lage, das Tor im verschlossenen Zustand zu halten, jedoch besteht die Gefahr, dass das Tor bei einer Störung in der Hydraulikanlage, insbesondere bei einem Druckabfall, ungewollt aufschwenkt. Durch die Verriegelungseinrichtung wird somit die Schließstellung des Tores zusätzlich gesichert.

Der Innenlader kann weiterhin eine maschinelle Schließeinrichtung umfassen, mittels derer die Verriegelungseinrichtung des Tores verschließbar ist. Die maschinelle Schließeinrichtung weist vorzugsweise einen hydraulisch, pneumatisch oder elektrisch angetriebenen Hubzylinder auf, der die Schwenkbewegung des Tores durchführt. Die entsprechenden Steuerbefehle sind von der Steuerungseinrichtung an die Schließeinrichtung, insbesondere an deren Hubzylinder, übermittelbar. Somit lässt sich die Verriegelungseinrichtung vereinfacht gesagt auf Knopfdruck schließen, indem beispielsweise ein in die Schließeinrichtung integrierter Fanghaken bei bereits weitgehend geschlossenem Tor ein am Tor vorgesehenes Rundrohr umgreift und das Tor an das Fahrzeugheck heranzieht. Die am Tor vorgesehene Zentriereinrichtung wird dabei in die am Fahrzeugrahmen vorgesehene Aufnahme hineingezogen.

Das Einschwenken des Tores aus der geöffneten Position in die geschlossene Position kann grundsätzlich manuell erfolgen. Analog zur maschinellen bzw. automatisierten Verriegelung des Tores ist es jedoch auch möglich, das Verschwenken des Tores mittels eines Hubzylinders maschinell und/oder automatisiert durchzuführen. Insofern kann auch das Tor insgesamt über einen Hubzylinder an den Fahrzeugrahmen gekoppelt sein, wobei der Hubzylinder wiederum hydraulisch, pneumatisch oder elektrisch angetrieben sein kann.

In einer bevorzugten Ausführungsform ist als Sensoreinrichtung eine Radareinrichtung, eine Ultraschalleinrichtung oder eine Lidar-Sensoreinrichtung vorgesehen. Mittels der genannten Sensoren lassen sich Entfernungen und/oder Abstände auf optischer beziehungsweise akustischer Basis oder mittels elektromagnetischer Wellen millimetergenau detektieren. So lässt sich mittels der Sensoreinrichtung insbesondere die relative Höhendifferenz zwischen der Zentriereinrichtung, beispielsweise einem Kegel, und der Aufnahme, beispielsweise einer Kegeltasche, ermitteln. Hierzu kann vorgesehen sein, dass ein Sensor beispielsweise an der Außenseite des Tores und ein weiterer Sensor an einer am Fahrzeugrahmen vorgesehenen Abschlussblende angeordnet sind. Über zwei von den Sensoren überwachte Messstrecken und deren Differenz ist anschließend die relative Höhendifferenz ermittelbar.

Die erfindungsgemäße Aufgabe wird auch gelöst durch ein Verfahren zum Verschließen eines Tores an einem Innenlader.

Bei einem solchen Verfahren wird zunächst bei geöffnetem Tor die Position der am Tor vorgesehenen Zentriereinrichtung relativ zur Position der am Fahrzeugrahmen angebrachten Aufnahme mittels geeigneter Sensoren detektiert und an die Steuerungseinrichtung übermittelt. Von der Steuerungseinrichtung wird auf Basis der übermittelten Sensordaten wenigstens ein Abstands-Istwert, vorzugsweise ein vertikaler Abstands-Istwert, zwischen den Positionen von Zentriereinrichtung und Aufnahme ermittelt und mit vordefinierten und in der Steuerungseinrichtung gespeicherten Sollwerten verglichen. Der ermittelte Abstands-Istwert bildet die Grundlage für ein Steuerungssignal, das von der Steuerungseinrichtung zum Anheben oder Absenken an die wenigstens eine Hubeinrichtung eines Laufrades des Innenladers übermittelt wird. Im Ergebnis wird somit einer der Schenkel des U-förmigen Fahrzeugrahmens angehoben oder abgesenkt und der Abstands-Istwert von Zentriereinrichtung und Aufnahme reduziert. Dabei können die Messungen und Stellbewegungen Teil eines Regelkreises sein, bei dem der Abstands-Istwert kontinuierlich mit dem Sollwert verglichen wird und eine kontinuierliche Nachjustierung so lange erfolgt, bis der Istwert dem Sollwert entspricht, beziehungsweise sich innerhalb eines ebenfalls vordefinierten Toleranzbereiches befindet.

Der Vorteil dieses Verfahrens liegt unter anderem darin, dass eine Bedienperson das Tor alleine in Schließstellung einschwenken kann ohne sich dabei um die Ausrichtung des Tores gegenüber dem Fahrzeugrahmen kümmern zu müssen.

In einer bevorzugten Ausgestaltung des Verfahrens wird
- die Zentriereinrichtung des Tores zunächst in einen Nahbereich an die Aufnahme herangeführt,
- das Verriegeln des Tores mittels eines Startsignals aktiviert,
- die Ermittlung der Positionen von Zentriereinrichtung und Aufnahme nach der Aktivierung kontinuierlich durchgeführt,
- das Steuersignal zum Anheben oder Absenken der Hubeinrichtung in einen Regelkreis integriert.

Im Ergebnis wird somit bei Aktivierung der Schließeinrichtung zum Verriegeln des Tores die Zentriereinrichtung automatisch in die Aufnahme eingefädelt.

In einer besonderen Ausführungsform wird die Ermittlung der Positionen von Zentriereinrichtung und Aufnahme erst dann aktiviert, wenn ein vordefinierter horizontaler Abstand zwischen der Zentriereinrichtung und Aufnahme unterschritten ist. Eine Korrektur des vertikalen Abstands-Istwerts ist insbesondere dann interessant, wenn die Zentriereinrichtung der Aufnahme relativ nah ist und erfolgt somit lediglich auf einem Schlussabschnitt der Schwenkbewegung des Tores. Ist der vertikale Abstand in dieser Phase der Schwenkbewegung des Tores zu groß, kann die Zentriereinrichtung nicht in die Aufnahme hineingleiten. Der horizontale Abstands-Istwert ab dessen Unterschreitung die Ermittlung der Positionsdaten erfolgt, beträgt vorzugsweise weniger als zwanzig Zentimeter, höchst vorzugsweise weniger als 10 Zentimeter. Durch diese späte Aktivierung beim Verschwenken des Tores erhöht sich auch die Arbeitssicherheit, weil gewährleistet ist, dass die Hubeinrichtung nicht bereits bei weit geöffnetem Tor aktiviert wird.

Weitere, die Erfindung verbessernde Maßnahmen werden nachstehend mit der Beschreibung von bevorzugten Ausführungsbeispielen der Erfindung anhand der Figuren näher dargestellt.

Die Figuren zeigen:
- Fig. 1: zeigt einen Innenlader in einer perspektivischen Ansicht von schräg hinten mit geöffnetem Tor;
- Fig. 2: zeigt den Innenlader gemäß Fig. 1 in einer Seitenansicht mit geschlossenem Tor;
- Fig. 3: zeigt einen Ausschnitt aus Fig. 2 in einer vergrößerten Ansicht;
- Fig. 4: zeigt einen Teilbereich von Tor und Innenlader-Heckbereich in einer vergrößerten perspektivischen Ansicht von schräg hinten bei geöffneter Verriegelung;
- Fig. 5: zeigt den Teilbereich von Tor und Heckbereich gemäß Fig. 4 mit eingehakter Verriegelung;
- Fig. 6: zeigt den Teilbereich von Tor und Heckbereich gemäß Fig. 5 mit Blick auf die freigestellte Schließeinrichtung des Tores;
- Fig. 7: zeigt einen Teilbereich des Fahrzeughecks mit Blick auf die Schließeinrichtung des Tores.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen, zusammengeführt werden können. Die Erfindung erstreckt sich nur auf solche Ausführungsformen, welche durch Merkmalskombinationen aus expliziten Rückbezügen der Ansprüche gegeben sind. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten eines auf einem festen Untergrund stehenden Innenladers.

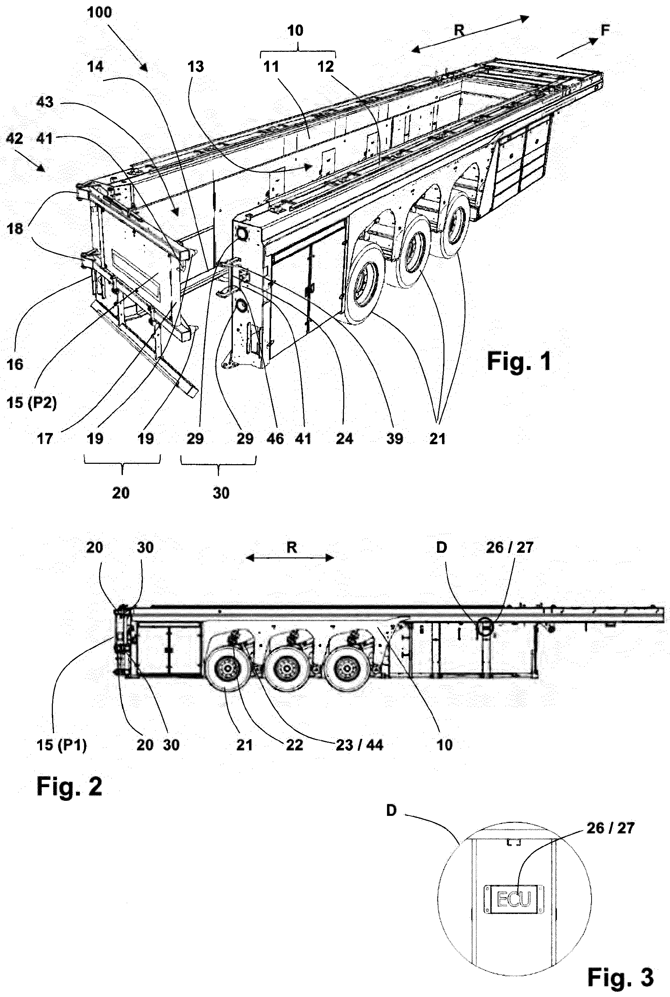

Fig. 1 zeigt einen Innenlader 100 in einer perspektivischen Ansicht von schräg hinten. Der Innenlader 100 umfasst einen in Fahrzeuglängsrichtung R ausgerichteten U-förmigen Fahrzeugrahmen 10 mit zwei Schenkeln 11, 12 zwischen denen ein Ladeschacht 13 angeordnet ist. Das in einer Fahrtrichtung F gesehen hintere Ende des Innenladers bildet ein offenes Fahrzeugheck 42 mit einer Beladeöffnung 43 aus, die mittels eines Tores 15 verschließbar ist. Im dargestellten Ausführungsbeispiel befindet sich im unteren Bereich der Schenkel 11, 12 eine Trageinrichtung 13 zur Aufnahme eines Transportgestells (nicht dargestellt) zum Transport großformatiger Bauteile.

Im dargestellten Ausführungsbeispiel ist das Tor 15 an seiner ersten Außenseite 16 mittels zweier Scharniere 18 an den Schenkel 11 des Fahrzeugrahmens 10 gekoppelt. An einer zweiten Außenseite 17 weist das Tor 15 einen Handgriff 41 auf, der dazu vorgesehen ist, einer Bedienperson das manuelle Auf- und Zuschwenken des Tores 15 zu erleichtern.

Im dargestellten Ausführungsbeispiel befindet sich das Tor 15 in einer Offenposition P2, in der zwei Zentriereinrichtungen 20, die durch zwei Kegel 19 ausgebildet werden, bereits in Richtung zweier Aufnahmen 30 weisen, aber noch nicht in diese eingetaucht sind. Die Aufnahmen 30 werden durch Kegeltaschen 29 ausgebildet, deren Form an die Form der Kegel 19 angepasst ist.

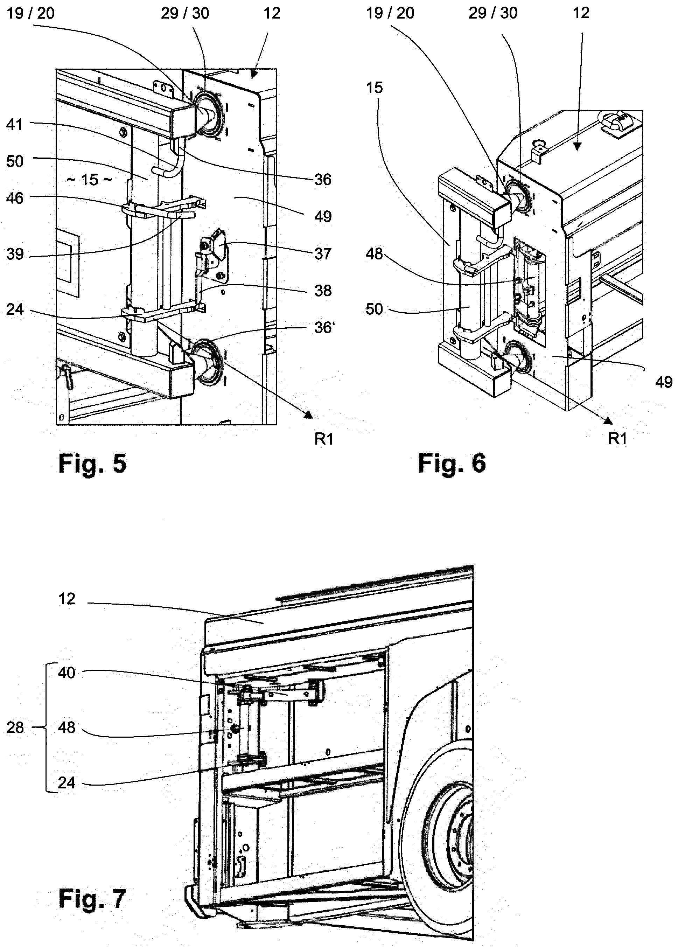

Befindet sich das Tor 15 in einer Schließposition P1 (vgl. Fig. 2), so ist es mit einer Verriegelungseinrichtung 24 verriegelbar. Um das Tor 15 zu schließen, wird es zunächst manuell so nah an das hintere Ende des Schenkels 12 herangeschwenkt, bis es in den Zugriffsbereich einer Verriegelungseinrichtung 24 gelangt. Die Verriegelungseinrichtung 24 umfasst einen Handgriff 39, mittels dessen ein an der Verrieglungseinrichtung 24 vorgesehener Haltehaken 46 in eine Schließposition schwenkbar ist, in der er eine am Tor 15 vorgesehenes Rundrohr 50 umgreift. Nachdem der Haltehaken 46 sich in Schließposition befindet, ist die Verrieglungseinrichtung 24 insgesamt, und damit auch das Tor 15, über einen Hubzylinder 40 (vgl. Fig. 7) ebenfalls in Schließposition an den Schenkel 12 heranziehbar.

Um das Tor 15 sicher in der Schließposition P1 zu halten, ist eine Blockiereinrichtung vorgesehen, die mittels eines Handgriffs 39 bedienbar ist und im aktivierten Zustand das Öffnen der Verriegelungseinrichtung 24 - und damit auch das Öffnen des Tores 15 - verhindert.

Fig. 2 zeigt den Innenlader gemäß Fig. 1 in einer Seitenansicht. Der Fahrzeugrahmen 10 wird von Laufrädern 21 getragen. Die Laufräder 21 sind über Radaufhängungen 22 an den Fahrzeugrahmen 10 gekoppelt und mittels Hubeinrichtungen 23 schwenkbar. Die Hubeinrichtung 23 umfasst Hubzylinder 44, die die Schwenkbewegung realisieren und den Fahrzeugrahmen 10 wahlweise anheben oder absenken.

Der Innenlader umfasst weiterhin eine Steuerungseinrichtung 26 mit einem Mikrocontroller 27 (vgl. Fig. 3, Detail D). Die Steuerungseinrichtung 26, die im dargestellten Ausführungsbeispiel in einem mittleren Bereich des Fahrzeugrahmens 10 angeordnet ist, dient zur Auswertung von Sensordaten und zum Erteilen von Steuerbefehlen an die Hubeinrichtung 23 und gegebenenfalls auch an eine Schließeinrichtung 28.

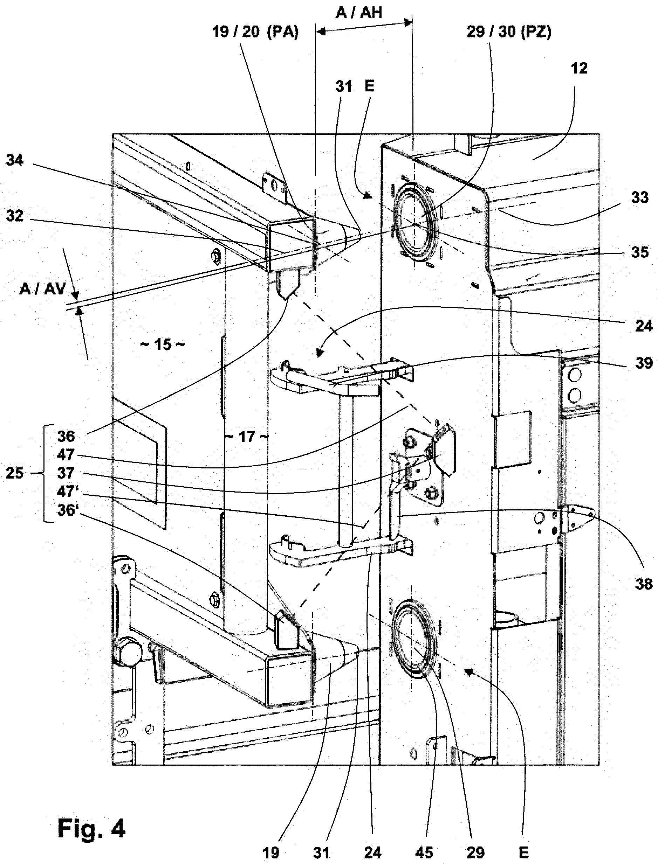

Fig. 4 zeigt einen Teilbereich von Tor 15 und Schenkel 12 des Innenladers 100 in einer vergrößerten perspektivischen Ansicht von schräg hinten bei geöffneter Verriegelungseinrichtung 24. Um die Ausrichtung der Kegel 19 in Bezug auf die Kegeltaschen 29 zu bestimmen ist eine Sensoreinrichtung 25 vorgesehen. Die Sensoreinrichtung 25 umfasst einen am hinteren Ende des Schenkels 12 angeordneten Sender 37 und zwei im Bereich der Außenseite 17 des Tores 15 angeordnete Empfänger 36, 36'. Im dargestellten Ausführungsbeispiel arbeitet die Sensoreinrichtung auf Basis von Ultraschallwellen, die vom Sender 37 schräg nach oben und unten in Richtung der Empfänger 36, 36' ausgesendet werden. Natürlich wäre es auch möglich, die Anordnung umzukehren, indem am Tor 15 ein oder mehrere Sender 37 und am hinteren Ende des Schenkels 12 ein oder mehrere Empfänger 36 angeordnet werden.

Die Strecke zwischen Sender 37 und Empfänger 36 wird als Messtrecke bezeichnet. Eine erste Messstrecke 47 erstreckt sich vom Sender 37 nach schräg oben zum Empfänger 36, eine zweite Messtrecke 47' erstreckt sich vom Sender 37 zum Empfänger 36' nach schräg unten. Indem die Messtrecken 47, 47' zwischen Sensor 37 und Empfänger 36 ermittelt werden, lässt sich somit eine Position PZ der Zentriereinrichtung 20 relativ zu einer Position PA der Aufnahme 30 ermitteln. Eine Sensorsteuerung sorgt dafür, dass die beiden Messstrecken 47, 47' abwechselnd geschaltet werden und immer nur ein Empfänger 36, 36' die vom Sender 37 emittierten Signale empfangen kann. Hierdurch wird sichergestellt, dass es zu keiner Überlagerung von Signalen kommt und die Messstrecken 47, 47' eindeutig definiert sind.

Die mittels der Sensoreinrichtung 25 ermittelten Messstrecken 47, 47' werden an die Steuerungseinrichtung 26 übermittelt und dienen als Grundlage zur Berechnung eines Abstands-Istwertes A zwischen Kegel 19 und Kegeltasche 29. Beispielsweise kann vorgesehen sein, dass der Abstands-Istwert A von einem Koordinatenzentrumspunkt 34 des Kegels 19 bis zu einem Koordinatenzentrumspunkt 35 der Kegeltasche 29 reicht. Der Koordinatenzentrumspunkt 34 wird durch den Schnittpunkt einer Mittelachse 32 des Kegels 19 mit der Ebene des Kegelfußes definiert. Analog dazu wird der Koordinatenzentrumspunkt 35 durch den Schnittpunkt einer Mittelachse 33 der Kegeltasche 29 mit der äußeren Öffnungsebene der Kegeltasche 29 definiert. Der Abstands-Istwert A lässt sich zerlegen in einen horizontalen Abstands-Istwert AH und einen vertikalen Abstand-Istwert AV.

Die von der Steuerungseinrichtung ermittelten Abstands-Istwerte AV in vertikaler Richtung und AH in horizontaler Richtung werden mit vordefinierten und in einem Datenspeicher der Steuerungseinrichtung hinterlegten Sollwerten verglichen. Liegen die genannten Abstands-Istwerte innerhalb eines ebenfalls vordefinierten Toleranzbereiches, so lässt sich als Rückschluss hieraus ableiten, dass sich bei Fortsetzen der Schwenkbewegung des Tores 15 eine am vorderen Ende des Kegels 19 angeordnete Kegelspitze 31 in die Kegeltasche 29 hineinbewegt und nicht neben einem die Kegeltasche 29 umgebenden Randes 45 mit dem Fahrzeugrahmen 10 kollidiert.

Liegt der vertikale Abstands-Istwert AV außerhalb des vordefinierten Toleranzbereiches, so befindet sich die Kegelspitze 31 auf Kollisionskurs zum Fahrzeugrahmen 10. In diesem Fall wird einer der Schenkel 11, 12 je nach Bedarf mittels der Hubeinrichtung 23 angehoben oder abgesenkt. Hierdurch ändert sich der Abstands-Istwert AV und der dann momentane IstWert kann wiederum mit dem vordefinierten Sollwert verglichen werden. Bei Bedarf wird einer der Schenkel 11, 12 ein weiteres Mal angehoben. Der genannte Vorgang wird solange wiederholt, bis der Abstands-Istwert AV innerhalb des vordefinierten Toleranzbereiches liegt und das Tor 15 geschlossen werden kann.

Analog zu einer Überprüfung des vertikalen Abstands-Istwertes AV ist auch eine Überprüfung des horizontalen Abstands-Istwertes AH möglich. Der horizontale Abstands-Istwert AH kann genutzt werden, um die Aktivierung der Hubvorrichtung 23 zu steuern. Beispielsweise kann vorgesehen sein, dass die Hubeinrichtung 23 grundsätzlich erst dann aktvierbar ist, wenn der horizontale Abstand-Istwert AH einen vordefinierten Wert unterschreitet. Vereinfacht gesagt, soll die Hubeinrichtung nicht kontinuierlich arbeiten, **sondern nur** dann, wenn das Tor 15 bereits nah an seine Schließposition P1 herangerückt ist.

Die Figuren 5 bis 7 zeigen die Funktionsweise der Schließvorrichtung 28. Die Schließeinrichtung 28 umfasst eine Drehwelle 48, die Verriegelungseinrichtung 24 mit dem Haltehaken 46 und dem Handgriff 39, den Sicherungshebel 38 und einen Hubzylinder 40. Die Drehwelle 48 befindet sich auf der Innenseite des Schenkels 12 des Fahrzeugrahmens 10. An die Drehwelle 48 ist der Hubzylinder 40, im vorliegenden Fall ein Hydraulikzylinder, und die Verriegelungseinrichtung 24 gekoppelt. Fährt nun der Hubzylinder 40 aus, dreht sich die Drehwelle 48 und die Verriegelungseinrichtung 24 bewegt sich Richtung einer am Ende des Schenkels 12 befindlichen Abschlussblende 49. Um das Tor 15 zu verriegeln, wird dieses manuell so weit geschlossen, bis die Haltehaken 46 um das am Tor 15 angeordnete vertikale Rundrohr 50 gelegt werden können. Wird nun die Torverriegelung mittels der Steuerungseinrichtung 26 aktiviert, zieht diese das Tor 15 mit seinen Kegeln 19 in die Kegeltaschen 29 an den Schenkel 12 heran und das Tor 15 ist verriegelt.

Nachfolgend wird ein Beispiel eines Öffnungs- und eines Schließvorganges im Detail erläutert:
Öffnen des Tores
- Die Verrieglungseinrichtung 24 wird manuell durch Umschwenken des Sicherungshebels 38 in eine horizontale Position manuell entsperrt. Hierdurch wird ein an der Drehwelle 48 anliegender Sperrhebel von der Drehwelle 48 wegbewegt und die zuvor verdrehsicher blockierte Drehwelle 48 wird für Drehbewegungen freigegeben.
- Die hydraulischen Verriegelungseinrichtungen 24 wird betätigt:
   o Die Kolbenstange des Hubzylinders 40 fährt ein.
   ∘ Die Kolbenstange ist über erste Hebel an die Drehwelle 48 gekoppelt.
   ∘ Die ersten Hebel sind an ihrem von der Kolbenstange abgewandten Ende an die Drehwelle 48 gekoppelt, vorzugsweise angeschweißt.
   ∘ Durch das Ausfahren der Kolbenstange wird über die ersten Hebel ein Drehmoment auf die Drehwelle 48 übertragen.
   ∘ Die Drehwelle 48 dreht sich gegen den Uhrzeigersinn.
   ∘ An die Drehwelle 48 sind weiterhin zwei Hebel gekoppelt, vorzugsweise angeschweißt.
   ∘ Dadurch, dass sich die Drehwelle 48 gegen den Uhrzeigersinn dreht, werden auch die zweiten Hebel gegen den Uhrzeigersinn gedreht.
   ∘ Die zweiten Hebel sind an den Haltehaken 46 gekoppelt.
   ∘ Der Haltehaken 46 hat an seiner anderen Seite eine hakenförmige Kontur. In Schließstellung umgreift die hakenförmige Kontur ein am Tor 15 angebrachtes Rundrohr 50.
   ∘ Indem die Drehwelle 48 gegen den Uhrzeigersinn gedreht wird, werden die zweiten Hebel ebenfalls gegen den Uhrzeigersinn verschwenkt und der Haltehaken 46 von dem Rundrohr 50 weg bewegt.
   ∘ Die Koppelstelle, an der der zweite Hebel an die Haltehaken 46 gekoppelt ist, bildet gleichzeitig eine Drehachse. Um zu verhindern, dass der Haltehaken 46 sich in eine undefinierte Position um die Drehachse der Koppelstelle dreht, ist er weiterhin federbelastet.
   ∘ Wenn der Haltehaken 46 sich von der Drehwelle 50 entfernt hat, kann das Tor 15 eine Drehbewegung um das Scharnier 18 ausführen. Hierzu muss der Haltehaken 46 so weit in eine Richtung R1 verschoben worden sein, dass das Rundrohr 50 des Tores 15 bei der Schwenkbewegung des Tores 15 am Haltehaken 46 vorbeigeführt werden kann ohne das der Haltehaken 46 mit dem Rundrohr 50 kollidiert.
- Die Schwenkbewegung des Tores 15 wird manuell durchgeführt, indem eine Bedienposition einen am Tor 15 angebrachten Handgriff 41 ergreift und das Tor 15 aufschwenkt.

Schließen des Tores
- Das Tor 15 wird von einer Bedienperson manuell in Richtung Fahrzeugheck 42 verschwenkt.
- Das Tor 15 wird soweit manuell eingeschwenkt, bis die Spitzen der Zentriereinrichtung 20, beispielsweise eine Kegelspitze 31, einen Abstand von 0 mm bis 80 mm, vorzugsweise 10 mm bis 30 mm zu einer äußeren Ebene E der Aufnahme 30 aufweist.
- Eine an die Steuerungseinrichtung 26 gekoppelte Schließautomatik wird betätigt und hiermit ein Regelkreis gestartet:
   ∘ Der Sender 37 der am Fahrzeugheck 42 angebrachten Sensoreinrichtung 25 sendet wenigstens ein Signal zu einem, vorzugsweise mehreren, an einen beziehungsweise mehrere am Tor 15 angebrachte Empfänger 36, 36'.
   ∘ Ein vom Sender 37 zum Empfänger 36, 36' reichender Abstand wird als Messtrecke 47, 47' detektiert und an die Steuerungseinrichtung 26 beziehungsweise deren Mikrocontroller 27 übermittelt.
   ∘ Im Mikrocontroller wird auf Basis der Messstrecken 47, 47' die Position PZ der Zentriereinrichtung 20 relativ zur Position PA der Aufnahme 30 und ein momentaner Abstand-Istwert A von Zentriereinrichtung 20 zu Aufnahme 30 ermittelt. Der momentane Abstands-Istwert A setzt sich zusammen aus einem horizontalen Abstand-Istwert AH und einem vertikalen Abstands-Istwert AV.
   o Als Basiswerte können insofern ein an der Zentriereinrichtung 20 vorgesehener Koordinatenzentrumspunkt 34 sowie ein an der Aufnahme 30 vorgesehener Koordinatenzentrumspunkt 35 Verwendung finden.
   ∘ Im Mikrocontroller 27 ist wenigstens ein vordefinierter Sollwert für den Abstand der Zentriereinrichtung 20 (zum Beispiel einem Kegel 19) zur Aufnahme 30 (zum Beispiel einer Kegeltasche 29) hinterlegt. Der Abstands-Sollwert betrifft einen horizontalen Abstands-Sollwert und/oder einen vertikalen Abstands-Sollwert.
   ∘ Ist der vertikale Abstands-Istwert AV größer als der vertikale Abstands-Sollwert, wird von der Steuerungsanlage ein Steuersignal an die Hubeinrichtung 23 der Radaufhängung 22 übermittelt und der Fahrzeugrahmen 10 wird an dem Schenkel, an dem auch die Verriegelungseinrichtung 24 angebracht ist, je nach Bedarf und hieraus resultierendem Steuerbefehl ein Stück weit entweder angehoben oder gesenkt.
   ∘ In einer einfachen Ausführungsform wird ein einmaliges Steuersignal an die Hubeinrichtung 23 übermittelt und der Schenkel 11, 12 des Fahrzeugrahmens einmalig so verschwenkt, dass Aufnahme 30 und Zentriereinrichtung 20 sich in der vordefinierten Sollposition zueinander befinden.
   ∘ In einer bevorzugten Ausführungsform ist das Messen der Abstands-Istwerte A und das Anheben/Absenken des Fahrzeugrahmens 10 in einen Regelkreis integriert. Es ist somit möglich:
      - entweder nach jeder Hub/Senkbewegung des Fahrzeugrahmen-Schenkels 11, 12 eine weitere Messung eines oder mehrerer Abstand-Istwerte A durchgeführt und zwar solange, bis die von der Sensoreinrichtung 25 ermittelten Messdaten der momentanen Abstands-Istwerte AV und/oder AH den vorgegebenen Sollwert erreicht haben, oder
      - kontinuierlich während der Hub/Senkbewegung Messungen durchzuführen, wobei ein entsprechendes Steuerungsprogramm so konzipiert ist, dass die momentanen Abstands-Istwerte A in kleinsten Zeiteinheiten, beispielsweise zwanzigmal pro Sekunde, solange kontinuierlich ermittelt wird, bis der momentanen Abstands-Istwerte AV und/oder AH den vorgegebenen Sollwert erreicht haben.
   ∘ Nach dem Anheben/Absenken des Fahrzeugrahmen-Schenkels 11, 12 oder, soweit ein Regelkreis vorgesehen ist, nachdem ein von der Sensoreinrichtung 25 gemessener Abstands-Istwert AV dem vordefinierten Sollwert entspricht, sendet die Steuerungseinrichtung 25 einen Befehl an den Hubzylinder 40 der Schließeinrichtung 28, um eine Drehung der Drehwelle 48 zu initiieren.
   ∘ Die Drehwelle 48 wird vom Hubzylinder 40 im Uhrzeigersinn gedreht.
   ∘ Durch das Drehen der Drehwelle 48 wird eine Bewegung auf die Verriegelungseinrichtung 24 und den Haltehaken 46 übertragen.
   ∘ Die Kinematik ist so konzipiert, dass der Haltehaken 46 der Verriegelungseinrichtung das Rundrohr 50 des Tores 15 umgreift und an das Fahrzeugheck 42 des Innenladers 100 heranzieht.
   ∘ Dabei erfolgt eine Feinjustierung, indem der am Tor 15 vorgesehene Kegel 19 in die am Fahrzeugheck 42 vorgesehene Kegeltasche 29 eingreift und die Kegelspitze 31 an der Außenwand der Kegeltasche 29 entlanggleitet, bis der Kegel 19 schließlich formschlüssig in der Kegeltasche 29 aufgenommen ist und das Tor 15 sich in Schließposition P1 befindet.
   ∘ Das Tor 15 wird somit durch den Hubzylinder 40 in der Schließposition P1 gehalten. Um zu verhindern, dass sich das Tor 15 bei einem Druckabfall öffnet, wird zusätzlich der manueller Sicherungshebel 38 betätigt. Der manuelle Sicherungshebel 38 ist an ein Sicherungselement gekoppelt, das in die Drehwelle 48 oder an der Drehwelle 48 eingreift, so dass die Drehmöglichkeit der Drehwelle 48 mechanisch blockiert wird. Auch bei Druckabfall im Hubzylinder 40 wird die Drehwelle 48 und damit das Tor 15 insgesamt somit in der Schließposition P1 gehalten.

Vorzugsweise erfolgt die Höhen-Nivellierung des Fahrzeugrahmens im Zusammenhang mit dem Schließen des Tores. Sie kann aber auch unabhängig davon durchgeführt werden, beispielsweise um den Fahrzeugrahmen bei geöffnetem Tor in eine für das Beladen optimale Position auszurichten.

### Bezugszeichenliste

- 10: Fahrzeugrahmen
- 11: Schenkel (von 10)
- 12: Schenkel (von 10)
- 13: Ladeschacht
- 14: Trageinrichtung
- 15: Tor
- 16: erste Außenseite (von 15)
- 17: zweite Außenseite (von 15)
- 18: Scharnier
- 19: Kegel
- 20: Zentriereinrichtung
- 21: Laufräder
- 22: Radaufhängung
- 23: Hubeinrichtung
- 24: Verriegelungseinrichtung
- 25: Sensoreinrichtung
- 26: Steuerungseinrichtung
- 27: Mikrocontroller
- 28: Schließeinrichtung
- 29: Kegeltasche
- 30: Aufnahme
- 31: Kegelspitze
- 32: Mittelachse (von 20)
- 33: Mittelachse (von 30)
- 34: Koordinatenzentrumspunkt (von 20)
- 35: Koordinatenzentrumspunkt (von 30)
- 36, 36': Empfänger
- 37: Sender
- 38: Sicherungshebel (für 28)
- 39: Handgriff (an 24)
- 40: Hubzylinder (von 28)
- 41: Handgriff (an 15)
- 42: Fahrzeugheck
- 43: Beladeöffnung
- 44: Hubzylinder (von 23)
- 45: Rand (von 29)
- 46: Haltehaken
- 47, 47': Messstrecke
- 48: Drehwelle (von 28)
- 49: Abschlussblende
- 50: Rundrohr

- 100: Innenlader

- A: Abstands-Istwert
- AH: horizontaler Abstands-Istwert
- AV: vertikaler Abstands-Istwert
- D: Detail
- E: Ebene (von 30)
- F: Fahrtrichtung
- P1: Schließposition (von 15)
- P2: Offenposition (von 15)
- PA: Position (von 30)
- PZ: Position (von 20)
- R: Fahrzeuglängsrichtung
- R1: Richtung

## Patentansprüche

1. Innenlader (100) mit einem in Fahrzeug-Längsrichtung (R) gerichteten, U-förmigen Fahrzeugrahmen (10) mit zwei Schenkeln (11, 12) und einem zwischen den Schenkeln (11, 12) angeordneten Ladeschacht (13), welcher durch ein Tor (15) verschließbar ist, wobei das Tor (15)
- an einer ersten Außenseite (16) mittels eines Scharniers (18) an einem der Schenkel (11, 12) schwenkbar angebracht ist,
- an einer zweiten Außenseite (17) wenigstens eine Zentriereinrichtung (20) umfasst, die mit einer an dem anderen der Schenkel (11, 12) angebrachten Aufnahme (30) koinzidiert und bei geschlossenem Tor (15) das Tor (15) gegenüber dem genannten anderen Schenkel (11, 12) in eine Schließposition (P1) ausrichtet,
und wobei die Schenkel (11, 12) von jeweils wenigstens einem, vorzugsweise mehreren, Laufrädern (21) mit einer Radaufhängung (22) getragen werden, **dadurch gekennzeichnet, dass** die Radaufhängungen (22) mittels einer Hubeinrichtung (23) an den Schenkeln (11, 12) einzeln oder gemeinsam höhenverstellbar sind und wenigstens eine Sensoreinrichtung (25) vorgesehen ist, die eine Position (PZ) der Zentriereinrichtung (20) relativ zu einer Position (PA) der Aufnahme (30) detektiert.

2. Innenlader (100) nach Anspruch 1, **dadurch gekennzeichnet, dass** eine Steuerungseinrichtung (26), vorzugsweise ein Mikrocontroller (27), vorgesehen ist, in welcher die Positionen (PZ) der Zentriereinrichtung (20) und (PA) der Aufnahme (30) in Bezug zueinander setzbar sind.

3. Innenlader (100) nach einem der Ansprüche 1 oder 2, **dadurch gekennzeichnet, dass** es sich bei der Zentriereinrichtung (20) um einen Kegel (19) und bei der Aufnahme (30) um eine Kegeltasche (29) handelt.

4. Innenlader (100) nach einem der Ansprüche 1 bis 3, **dadurch gekennzeichnet, dass** eine Verriegelungseinrichtung (24) vorgesehen ist, mittels derer das Tor (15) in der Schließposition (P1) fixierbar ist.

5. Innenlader (100) nach einem der Ansprüche 1 bis 4, **dadurch gekennzeichnet, dass** die Verriegelungseinrichtung (24) mittels einer maschinellen Schließeinrichtung (28) verschließbar ist, wobei die Schließeinrichtung (28) vorzugsweise einen hydraulisch, pneumatisch oder elektrisch angetriebenen Hubzylinder (40) umfasst.

6. Innenlader (100) nach einem der Ansprüche 1 bis 5, **dadurch gekennzeichnet, dass** das Tor (15) mittels einer maschinellen Schließeinrichtung verschließbar ist, wobei die Schließeinrichtung vorzugsweise einen hydraulisch, pneumatisch oder elektrisch angetriebenen Hubzylinder umfasst.

7. Innenlader (100) nach einem der Ansprüche 1 bis 6, **dadurch gekennzeichnet, dass** als Sensoreinrichtung (25) eine Radareinrichtung, eine Ultraschalleinrichtung oder eine Lidar-Sensoreinrichtung vorgesehen ist.

8. Verfahren zum Verschließen eines Tores (15) an einem Innenlader (100) nach einem der Ansprüche 1 bis 7, **dadurch gekennzeichnet, dass**:
- bei geöffnetem Tor (15) die Position (PZ) der Zentriereinrichtung (20) relativ zur Position (PA) der Aufnahme (30) detektiert und an eine Steuerungseinrichtung (26) übermittelt wird,
- von der Steuerungseinrichtung (26) wenigstens ein Abstands-Istwert (A), vorzugsweise ein vertikaler Abstands-Istwert (AV), zwischen den Positionen (PZ) und (PA) ermittelt wird,
- der Abstands-Istwert (A, AV) mit vordefinierten und in der Steuerungseinrichtung (26) gespeicherten Sollwerten verglichen wird,
- die Steuerungseinrichtung (26) ein Steuerungssignal zum Anheben oder Absenken an die wenigstens eine Hubeinrichtung (23) eines Laufrades (21) übermittelt,
so dass einer der Schenkel (11, 12) angehoben oder abgesenkt und der Abstands-Istwert (A, AV) von Zentriereinrichtung (20) und Aufnahme (30) reduziert wird.

9. Verfahren nach Anspruch 8, **dadurch gekennzeichnet, dass**
- die Zentriereinrichtung (20) des Tores (15) in einen Nahbereich an die Aufnahme (30) herangeführt wird,
- das Verriegeln des Tores (15) mittels eines Startsignals aktivierbar ist,
- die Ermittlung der Positionen (PZ, PA) von Zentriereinrichtung (20) und Aufnahme (30) nach der Aktivierung kontinuierlich erfolgt und
- das Steuersignal Bestandteil eines Regelkreises ist,
so dass bei Aktivierung der Schließeinrichtung (28) zum Verriegeln des Tores (15) die Zentriereinrichtung (20) automatisch in die Aufnahme (30) eingefädelt wird.

10. Verfahren nach Anspruch 9, **dadurch gekennzeichnet, dass** die Ermittlung der Positionen (PZ, PA) von Zentriereinrichtung (20) und Aufnahme (30) erst aktiviert wird, wenn ein vordefinierter horizontaler Abstand (AH) zwischen der Zentriereinrichtung (20) und Aufnahme (30) unterschritten, so dass eine Korrektur der vertikalen Abstands-Istwerts (AV) lediglich auf einem Schlussabschnitt der Schwenkbewegung des Tores (15) erfolgt.

## Claims

1. Internal loader (100) with a U-shaped vehicle frame (10) directed in the longitudinal direction (R) of the vehicle and having two limbs (11, 12) and a loading shaft (13) arranged between the limbs (11, 12), which can be closed by a gate (15), wherein the gate (15)
- is pivotably attached to one of the limbs (11, 12) on a first outer side (16) by means of a hinge (18),
- on a second outer side (17) comprises at least one centring device (20), which coincides with a receptacle (30) attached to the other of the limbs (11, 12) and, when the gate (15) is closed, aligns the gate (15) with respect to the said other limb (11, 12) in a closed position (P1),
and wherein the limbs (11, 12) are each carried by at least one, preferably several, running wheels (21) with a wheel suspension (22), **characterised in that** the wheel suspensions (22) are individually or jointly height-adjustable by means of a lifting device (23) on the limbs (11, 12) and at least one sensor device (25) is provided which detects a position (PZ) of the centring device (20) relative to a position (PA) of the receptacle (30).

2. Internal loader (100) according to claim 1, **characterised in that** a control device (26), preferably a microcontroller (27), is provided, in which the positions (PZ) of the centring device (20) and (PA) of the receptacle (30) can be set in relation to one another.

3. Internal loader (100) according to one of claims 1 or 2, **characterised in that** the centring device (20) is a cone (19) and the receptacle (30) is a conical pocket (29).

4. Internal loader (100) according to one of claims 1 to 3, **characterised in that a** locking device (24) is provided, by means of which the gate (15) can be fixed in the closing position (P1).

5. Internal loader (100) according to one of claims 1 to 4, **characterised in that** the locking device (24) can be closed by means of a mechanical closing device (28), wherein the closing device (28) preferably comprises a hydraulically, pneumatically or electrically driven lifting cylinder (40).

6. Internal loader (100) according to one of claims 1 to 5, **characterised in that** the gate (15) can be closed by means of a mechanical closing device, the closing device preferably comprising a hydraulically, pneumatically or electrically driven lifting cylinder.

7. Internal loader (100) according to one of claims 1 to 6, **characterised in that** a radar device, an ultrasonic device or a lidar sensor device is provided as the sensor device (25).

8. Method for closing a gate (15) on an internal loader (100) according to one of claims 1 to 7, **characterised in that:**
- when the gate (15) is open, the position (PZ) of the centring device (20) relative to the position (PA) of the receptacle (30) is detected and transmitted to a control device (26),
- at least one actual distance value (A), preferably an actual vertical distance value (AV), between the positions (PZ) and (PA) is determined by the control device (26),
- the actual distance value (A, AV) is compared with predefined setpoint values stored in the control device (26),
- the control device (26) transmits a control signal for raising or lowering to the at least one lifting device (23) of a running wheel (21),
so that one of the limbs (11, 12) is raised or lowered and the actual distance (A, AV) between the centring device (20) and the receptacle (30) is reduced.

9. Method according to claim 8, **characterised in that**
- the centring device (20) of the gate (15) is brought into close proximity to the receptacle (30),
- the locking of the door (15) can be activated by means of a start signal,
- the positions (PZ, PA) of the centring device (20) and the receptacle (30) are determined continuously after activation, and
- the control signal is part of a control loop,
so that when the closing device (28) for locking the gate (15) is activated, the centring device (20) is automatically threaded into the receptacle (30).

10. Method according to claim 9, **characterised in that** the determination of the positions (PZ, PA) of the centring device (20) and the receptacle (30) is only activated when a predefined horizontal distance (AH) between the centring device (20) and the receptacle (30) is undershot, so that a correction of the actual vertical distance value (AV) only takes place on a final section of the pivoting movement of the gate (15).

## Revendications

1. Chargeur intérieur (100) avec un châssis de véhicule (10) en forme de U, orienté dans le sens longitudinal (R) du véhicule, avec deux branches (11, 12) et un puits de chargement (13) disposé entre les branches (11, 12), lequel peut être fermé par une porte (15), la porte (15)
- est montée sur un premier côté extérieur (16) pivotante au moyen d'une charnière (18) sur l'une des branches (11, 12),
- comporte sur un deuxième côté extérieur (17) au moins un dispositif de centrage (20), qui coopère avec une réception (30) ménagé sur l'autre des branches (11, 12) et qui, lorsque la porte (15) est fermée, oriente la porte (15) par rapport à ladite autre branche (11, 12) dans une position de fermeture (P1),
et les branches (11, 12) étant portées chacune par au moins une, de préférence plusieurs, roues de roulement (21) avec une suspension de roue (22), **caractérisé en ce que** les suspensions de roue (22) sont réglables en hauteur individuellement ou ensemble au moyen d'un dispositif de levage (23) sur les branches (11, 12) et **en ce qu'**il est prévu au moins un dispositif de détection (25) qui détecte une position (PZ) du dispositif de centrage (20) par rapport à une position (PA) de la réception (30).

2. Chargeur intérieur (100) selon la revendication 1, **caractérisé en ce qu'**il est prévu un dispositif de commande (26), de préférence un microcontrôleur (27), dans lequel les positions (PZ) du dispositif de centrage (20) et (PA) de la réception (30) peuvent être réglées l'une par rapport à l'autre.

3. Chargeur intérieur (100) selon l'une des revendications 1 ou 2, **caractérisé en ce que** le dispositif de centrage (20) est un cône (19) et la réception (30) est une poche conique (29).

4. Chargeur intérieur (100) selon l'une des revendications 1 à 3, **caractérisé en ce qu'**il est prévu un dispositif de verrouillage (24) permettant de fixer la porte (15) dans la position de fermeture (P1).

5. Chargeur intérieur (100) selon l'une des revendications 1 à 4, **caractérisé en ce que** le dispositif de verrouillage (24) peut être fermé au moyen d'un dispositif de fermeture mécanique (28), le dispositif de fermeture (28) comprenant de préférence un vérin de levage (40) à entraînement hydraulique, pneumatique ou électrique.

6. Chargeur intérieur (100) selon l'une des revendications 1 à 5, **caractérisé en ce que** la porte (15) peut être fermée au moyen d'un dispositif de fermeture mécanique, le dispositif de fermeture comprenant de préférence un vérin de levage à entraînement hydraulique, pneumatique ou électrique.

7. Chargeur intérieur (100) selon l'une des revendications 1 à 6, **caractérisé en ce qu'**il est prévu comme dispositif de détection (25) un dispositif radar, un dispositif à ultrasons ou un dispositif de détection lidar.

8. Procédé de fermeture d'une porte (15) sur un chargeur intérieur (100) selon l'une des revendications 1 à 7, **caractérisé en ce que** :
- lorsque la porte (15) est ouverte, la position (PZ) du dispositif de centrage (20) par rapport à la position (PA) de la réception (30) est détectée et transmise à un dispositif de commande (26),
- au moins une valeur réelle de distance (A), de préférence une valeur réelle de distance verticale (AV), est déterminée par le dispositif de commande (26) entre les positions (PZ) et (PA),
- la valeur réelle de distance (A, AV) est comparée à des valeurs de consigne prédéfinies et mémorisées dans le dispositif de commande (26),
- le dispositif de commande (26) transmet un signal de commande pour le soulèvement ou l'abaissement à l'au moins un dispositif de levage (23) d'une roue de roulement (21),
de sorte qu'une des branches (11, 12) est soulevée ou abaissée et que la valeur réelle de la distance (A, AV) entre le dispositif de centrage (20) et la réception (30) est réduite.

9. Procédé selon la revendication 8, **caractérisé en ce que**
- le dispositif de centrage (20) de la porte (15) est rapproché de la réception (30) dans une zone proche,
- le verrouillage de la porte (15) peut être activé au moyen d'un signal de départ,
- la détermination des positions (PZ, PA) du dispositif de centrage (20) et de la réception (30) s'effectue en continu après l'activation et
- le signal de commande fait partie d'un circuit de régulation,
de sorte que, lors de l'activation du dispositif de fermeture (28) pour verrouiller la porte (15), le dispositif de centrage (20) est automatiquement enfilé dans la réception (30).

10. Procédé selon la revendication 9, **caractérisé en ce que** la détermination des positions (PZ, PA) du dispositif de centrage (20) et de la réception (30) n'est activée que lorsqu'une distance horizontale prédéfinie (AH) entre le dispositif de centrage (20) et la réception (30) n'est pas atteinte, de sorte qu'une correction de la valeur réelle de la distance verticale (AV) n'a lieu que sur une section finale du mouvement de pivotement de la porte (15).
